# EUROPEAN PATENT APPLICATION

(11) **EP 4 760 250 A1**
(43) Date of publication of application: **17.06.2026**
(21) Application number: 25223145.1
(22) Date of filing: 12.12.2025
(51) Int. Cl.: G01N 27/20, B64F 5/60

(54) **IMPEDANCE INSPECTION SYSTEM AND METHOD FOR USING SAME**

(30) Priority: 12.12.2024 US 202418979223
(71) Applicant: RTX Corporation, Farmington, CT 06032 (US)
(72) Inventor: CHEN, Yan, South Windsor, 06074 (US); CHAUDHRY, Zaffir, Farmington, 06032 (US)
(74) Representative: Dehns

(57) **Abstract**

A method for inspecting a component (66) for an aircraft propulsion system (22, 68) with an impedance-measuring inspection system (64) includes, for each of a plurality of different positions on the component (66), positioning a probe assembly (70) of the impedance-measuring inspection system (64) at one of the plurality of different positions with a first electrode (80) and a second electrode (82) of the probe assembly (70) contacting the component (66), measuring an impedance of the component (66) between the first electrode (80) and the second electrode (82) over a frequency range extending between a first alternating current (AC) frequency and a second AC frequency, and determining an impedance differential (112) of the impedance over the frequency range. The method further includes identifying a presence or an absence of a defect condition of the component (66) using an impedance differential profile (118, 120) for the component (66) including the impedance differential (112) at each of the plurality of different positions on the component (66).

## Description

### TECHNICAL FIELD

This disclosure relates generally to the inspection of aircraft propulsion system components using non-destructive testing techniques and, more particularly, to electrical impedance-based component inspection.

### BACKGROUND

Various systems and methods are known in the art for inspecting a component for internal defects. While these known inspection systems and methods have various benefits, there is still room in the art for improvement.

### SUMMARY

According to an aspect of the present invention, a method for inspecting a component for an aircraft propulsion system with an impedance-measuring inspection system includes, for each of a plurality of different positions on the component, positioning a probe assembly of the impedance-measuring inspection system at one of the plurality of different positions with a first electrode and a second electrode of the probe assembly contacting the component, measuring an impedance of the component between the first electrode and the second electrode over a frequency range extending between a first alternating current (AC) frequency and a second AC frequency, and determining an impedance differential of the impedance over the frequency range. The method further includes identifying a presence or an absence of a defect condition of the component using an impedance differential profile for the component including the impedance differential at each of the plurality of different positions on the component.

In an embodiment of the above, positioning the probe assembly at the one of the plurality of different positions on the component may include rotating the component about an axis, and each of the plurality of different positions on the component may be a circumferential position of the component relative to the axis.

In an embodiment according to any of the previous embodiments, the frequency range may be between 20 hertz and 2,000 hertz.

In an embodiment according to any of the previous embodiments, the frequency range may be between 20 hertz and 1,000 hertz.

In an embodiment according to any of the previous embodiments, the method may further include, for each of the plurality of different positions on the component, applying a vibrational excitation of the component while measuring the measuring the impedance of the component between the first electrode and the second electrode over the frequency range.

In an embodiment according to any of the previous embodiments, identifying the presence or the absence of the defect condition of the component using the impedance differential profile may include determining a variation of the impedance differential profile between a maximum impedance differential and a minimum impedance differential and comparing the variation to a variation threshold. The presence of the defect condition may be identified where the variation is greater than the variation threshold.

In an embodiment according to any of the previous embodiments, identifying the presence or the absence of the defect condition of the component using the impedance differential profile may include comparing the impedance differential profile to a defect-free model impedance differential profile for the component.

In an embodiment according to any of the previous embodiments, the method may further include inserting the probe assembly into the aircraft propulsion system to position the probe assembly at the component prior to, for each of the plurality of different positions on the component, positioning the probe assembly, measuring the impedance, and determining the impedance differential.

In an embodiment according to any of the previous embodiments, the step of inserting the probe assembly into the aircraft propulsion system to position the probe assembly at the component may be performed with the aircraft propulsion system installed on an aircraft.

In an embodiment according to any of the previous embodiments, the component may be a gas turbine engine rotor disk of the aircraft propulsion system.

According to another aspect of the present invention, an impedance-measuring inspection system includes a probe assembly and a control assembly. The probe assembly includes a first electrode and a second electrode. The control assembly includes a signal generator, a measurement channel, and a processing system. The signal generator is electrically connected with the first electrode. The measurement channel is electrically connected with the second electrode. The processing system includes a processor connected in signal communication with a non-transitory memory storing instructions which, when executed by the processor, cause the processor to measure, using the measurement channel, an impedance of a component between the first electrode and the second electrode while controlling the signal generator to generate an alternating current (AC) output to the first electrode over a frequency range extending between a first AC frequency and a second AC frequency, determine an impedance differential of the impedance over the frequency range, generate an impedance differential profile for the component with the impedance differential determined for a plurality of different positions on the component, and identify a presence or an absence of a defect condition of the component using the impedance differential profile.

In an embodiment of the above, the probe assembly may include a probe, the probe may include a probe housing, and the first electrode and the second electrode may be disposed on the probe housing.

In an embodiment according to any of the previous embodiments, the probe assembly may include a first probe and a second probe, the first electrode may be disposed on the first probe, and the second electrode may be disposed on the second probe.

In an embodiment according to any of the previous embodiments, the impedance-measuring inspection system may further include an actuator assembly including a piezoelectric actuator.

In an embodiment according to any of the previous embodiments, the probe assembly may include a probe, the probe may include a probe housing, and the first electrode, the second electrode, and the piezoelectric actuator may be disposed on the probe housing.

According to another aspect of the present invention, a method for inspecting a component for an aircraft propulsion system with an impedance-measuring inspection system includes, for each of a plurality of different positions on the component, positioning a probe assembly of the impedance-measuring inspection system at one of the plurality of different positions with a first electrode and a second electrode of the probe assembly contacting the component, applying a vibrational excitation to the component at a vibratory frequency with a piezoelectric actuator of the probe assembly, measuring an impedance of the component between the first electrode and the second electrode over a frequency range extending between a first alternating current (AC) frequency and a second AC frequency while applying the vibrational excitation to the component to determine an impedance curve for the component, and determining an impedance differential of the impedance curve over the frequency range. The method further includes identifying a presence or an absence of a defect condition of the component using an impedance differential profile for the component including the impedance differential at each of the plurality of different positions on the component.

In an embodiment of the above, the vibratory frequency may be a resonance frequency for the component.

In an embodiment according to any of the previous embodiments, the method may further include inserting the probe assembly into the aircraft propulsion system to position the probe assembly at the component prior to, for each of the plurality of different positions on the component, positioning the probe assembly, measuring the impedance, and determining the impedance differential.

In an embodiment according to any of the previous embodiments, the step of inserting the probe assembly into the aircraft propulsion system to position the probe assembly at the component may be performed with the aircraft propulsion system installed on an aircraft.

In an embodiment according to any of the previous embodiments, the component may be a gas turbine engine rotor disk of the aircraft propulsion system.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 illustrates a perspective view of an aircraft including a propulsion system, in accordance with one or more embodiments of the present disclosure.
FIG. 2 schematically illustrates a cutaway, side view of an aircraft propulsion system including a gas turbine engine, in accordance with one or more embodiments of the present disclosure.
FIG. 3 schematically illustrates an inspection system for an aircraft propulsion system component, in accordance with one or more embodiments of the present disclosure.
FIG. 4 schematically illustrates a portion of a probe assembly for the inspection system of FIG. 3, in accordance with one or more embodiments of the present disclosure.
FIG. 5 schematically illustrates a portion of the inspection system of FIG. 3 installed on a component, in accordance with one or more embodiments of the present disclosure.
FIG. 6 schematically illustrates a portion of another inspection system for an aircraft propulsion system component, in accordance with one or more embodiments of the present disclosure.
FIG. 7 schematically illustrates a portion of a probe assembly for the inspection system of FIG. 6, in accordance with one or more embodiments of the present disclosure.
FIG. 8 schematically illustrates a portion of another probe assembly for the inspection system of FIG. 6, in accordance with one or more embodiments of the present disclosure.
FIG. 9 illustrates a block diagram depicting a method for inspecting a component of an aircraft propulsion system using an impedance-measuring inspection system, in accordance with one or more embodiments of the present disclosure.
FIG. 10 schematically illustrates a probe assembly of the inspection system positioned at a component, in accordance with one or more embodiments of the present disclosure.
FIG. 11 illustrates an impedance curve for the component over a range of alternating current (AC) measurement frequencies, in accordance with one or more embodiments of the present disclosure.
FIG. 12 illustrates impedance differential profiles for an aircraft propulsion system component, in accordance with one or more embodiments of the present disclosure.
FIG. 13 illustrates an impedance differential profile for an aircraft propulsion system component, in accordance with one or more embodiments of the present disclosure.

### DETAILED DESCRIPTION

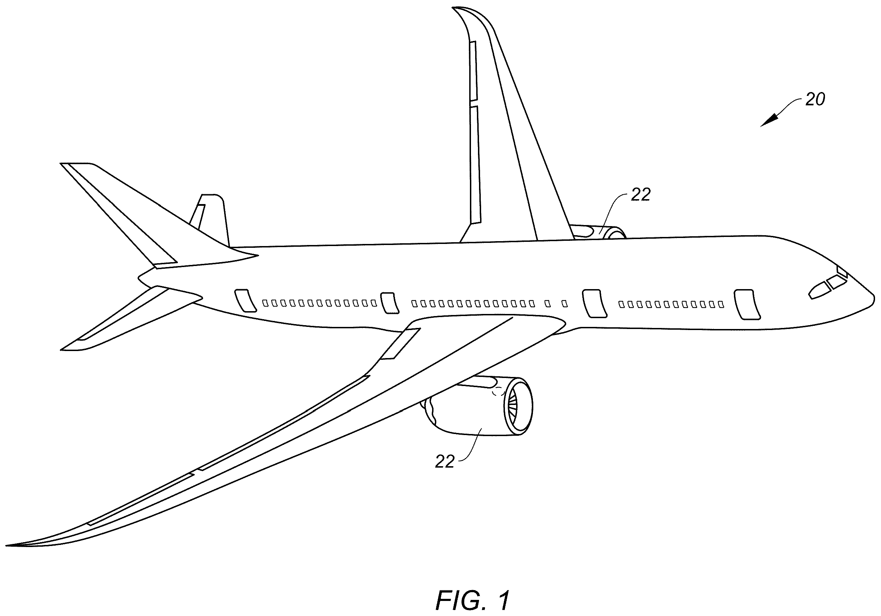

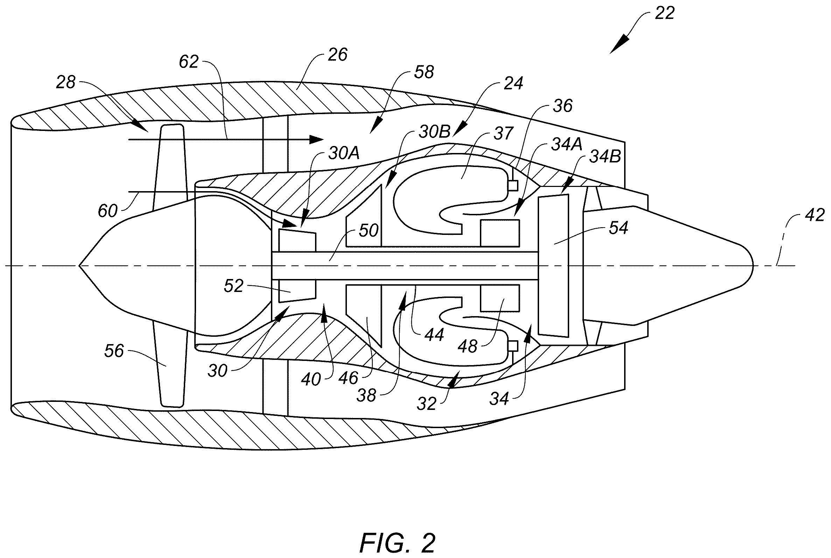

FIG. 1 illustrates an aircraft 20 including a propulsion system 22. Briefly, the aircraft 20 may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft 20 may be a manned aerial vehicle or an unmanned aerial vehicle (UAV, e.g., a drone). FIG. 2 schematically illustrates a cutaway, side view of the propulsion system 22. The propulsion system 22 of FIG. 2 includes a gas turbine engine 24 and a nacelle 26.

The gas turbine engine 24 of FIG. 2 is configured as a multi-spool turbofan gas turbine engine 24. However, while the following description and accompanying drawings may refer to the turbofan gas turbine engine 24 of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine.

The gas turbine engine 24 of FIG. 2 includes a fan section 28, a compressor section 30, a combustor section 32, a turbine section 34, and an engine static structure 36. The compressor section 30 includes a low-pressure compressor (LPC) 30A and a high-pressure compressor (HPC) 30B. The combustor section 32 includes a combustor 37 (e.g., an annular combustor). The turbine section 34 includes a high-pressure turbine (HPT) 34A and a low-pressure turbine (LPT) 34B.

Components of the fan section 28, the compressor section 30, and the turbine section 34 form a first rotational assembly 38 (e.g., a high-pressure spool) and a second rotational assembly 40 (e.g., a low-pressure spool) of the gas turbine engine 24. The first rotational assembly 38 and the second rotational assembly 40 are mounted for rotation about a rotational axis 42 (e.g., an axial centerline) of the gas turbine engine 24 relative to the engine static structure 36.

The first rotational assembly 38 includes a first shaft 44, a bladed first compressor rotor 46 for the high-pressure compressor 30B, and a bladed first turbine rotor 48 for the high-pressure turbine 34A. The first shaft 44 interconnects the bladed first compressor rotor 46 and the bladed first turbine rotor 48.

The second rotational assembly 40 includes a second shaft 50, a bladed second compressor rotor 52 for the low-pressure compressor 30A, a bladed second turbine rotor 54 for the low-pressure turbine 34B, and a bladed fan rotor 56 for the fan section 28. The second shaft 50 interconnects the bladed second compressor rotor 52 and the bladed second turbine rotor 54. The second shaft 50 may additionally interconnect the bladed fan rotor 56 with the bladed second compressor rotor 52 and the bladed second turbine rotor 54. Alternatively, the second shaft 50 may be coupled with the bladed fan rotor 56 by a gear assembly (e.g., a reduction gear box (RGB)). The first shaft 44 and the second shaft 50 are concentric and configured to rotate about the rotational axis 42. The present disclosure, however, is not limited to concentric configurations of the first shaft 44 and the second shaft 50.

The engine static structure 36 may include one or more engine cases, cowlings, bearing assemblies, inner fixed structures, and/or other non-rotating structures configured to house and/or support (e.g., rotationally support) components of the gas turbine engine sections 28, 30, 32, 34. The engine static structure 36 may form an exterior (e.g., an outer radial portion) of the gas turbine engine 24.

The nacelle is configured to house and provide an aerodynamic cover for the gas turbine engine 24. The nacelle may extend circumferentially about (e.g., completely around) the gas turbine engine 24 and its rotational axis 42. The nacelle may circumscribe and form an annular bypass duct 58 through the propulsion system 22. For example, the bypass duct 58 may be formed by and between (e.g., radially between) the gas turbine engine 24 (e.g., the engine static structure 36) and the nacelle.

In operation of the gas turbine engine 24, ambient air is directed through the fan section 28 and into a core flow path 60 (e.g., an annular flow path) and a bypass flow path 62 (e.g., an annular flow path) by rotation of the bladed fan rotor 56. Air flow along the core flow path 60 is compressed by the low-pressure compressor 30A and the high-pressure compressor 30B, mixed and burned with fuel in the combustor, and then directed through the high-pressure turbine 34A and the low-pressure turbine 34B. The bladed first turbine rotor 48 and the bladed second turbine rotor 54 rotationally drive the first rotational assembly 38 and the second rotational assembly 40, respectively, in response to the combustion gas flow through the high-pressure turbine 34A and the low-pressure turbine 34B. Air flow along the bypass flow path 62 is directed through the bypass duct 58.

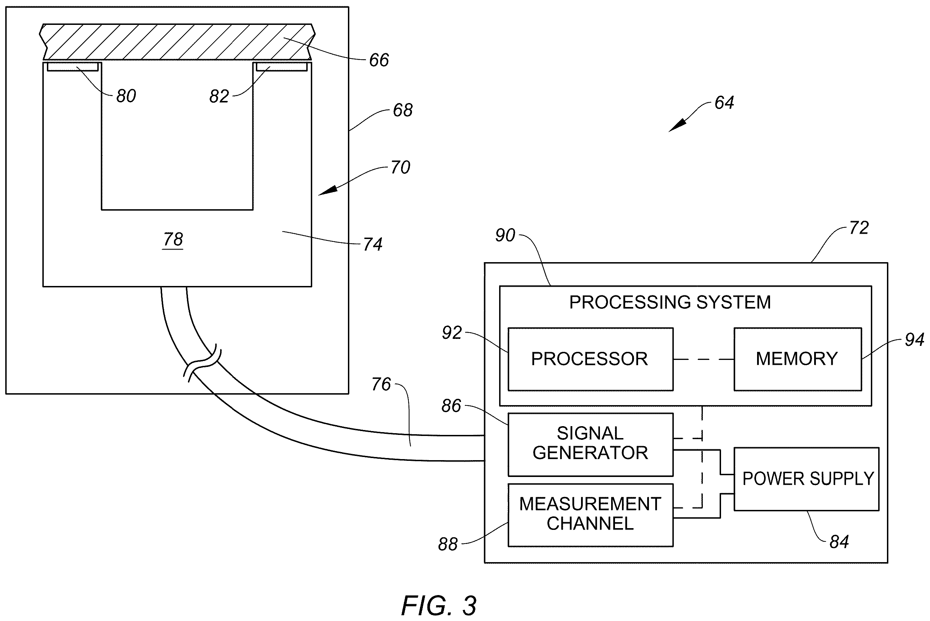

FIG. 3 schematically illustrates an inspection system 64 for inspecting a component 66 of an aircraft propulsion system 68 such as, but not limited to, the propulsion system 22 of FIGS. 1 and 2. The inspection system 64 may be configured to facilitate inspection of the component 66 while the component 66 remains installed with the propulsion system 68 on the aircraft 20 (e.g., the propulsion system 68 remains installed on wing, on fuselage, in airframe, etc.). The component 66, for example, may be disposed within an interior (e.g., an enclosed volume, an encased volume, etc.) of the propulsion system 68. Inspection of the component 66 may also be performed using the inspection system 64 while outside of an aircraft hangar and/or a dedicated inspection and/or repair facility (e.g., on a tarmac at an airport between aircraft flights). Inspection of the component 66 may thereby be performed with a relatively short aircraft downtime and/or a relatively minimal expense. The inspection system 64, of course, may also be used for inspecting the component 66 installed with the propulsion system 68 when that propulsion system 68 is not installed with the aircraft 20 (e.g., prior to installation with the aircraft 20 or following removal from the aircraft 20) or with the component 66 removed from the propulsion system 68. Inspection of the component 66 using the inspection system 64 may facilitate identification of one or more internal defects of the component such as cracks, voids, etc. (e.g., embedded within material of) the component 66. The term "defect," as used herein, shall refer to a physical anomaly present within a component (e.g., the component 66) which negatively affects the useful life or performance of the component.

The component 66 may be any inspectable (e.g., metal) component 66 within the propulsion system 68. However, for ease of description, the component 66 may be described below as a rotor disk of a bladed rotor of a gas turbine engine such as, but not limited to, the gas turbine engine 24 of FIG. 2. The rotor disk may be a turbine disk such as a rotor disk in a high-pressure turbine (HPT) or a low-pressure turbine (LPT) of a gas turbine engine. Alternatively, the rotor disk may be a compressor disk such as a rotor disk in a low-pressure compressor (LPC) or a high-pressure compressor (HPC) of a gas turbine engine. The present disclosure, however, is not limited to such exemplary component 66 configurations. The component 66, for example, may alternatively be configured as a hub, a shaft or any rotating component within the propulsion system 68.

The inspection system 64 of FIG. 3 is configured as an impedance testing system. For example, the inspection system 64 may be configured for electrical impedance testing and/or other non-destructive testing (NDT) techniques involving application of impedance measurement to a test object (e.g., the component 66). The inspection system 64 of FIG. 3 includes a probe assembly 70 and a control assembly 72.

The probe assembly 70 may be a borescope probe assembly configured for insertion into the propulsion system 68 for inspection of the component 66. However, the probe assembly 70 of the present disclosure is not limited to borescope probe assembly configurations. The probe assembly 70 of FIG. 3, for example, includes a probe 74 and a guide tube 76.

The probe 74 of FIG. 3 includes a probe housing 78, a first electrode 80, and a second electrode 82. The first electrode 80 and the second electrode 82 are disposed on the probe housing 78 spaced from one another. The first electrode 80 and the second electrode 82 may be positionally fixed on the probe housing 78 relative to one another. The guide tube 76 is connected to the probe 74 at (e.g., on, adjacent, or proximate). The guide tube 76 may extend all or a substantial portion of a distance from the probe 74 to the control assembly 72. The guide tube 76 may be configured as a conduit to house and protect wiring extending between the probe 74 and the control assembly 72. The guide tube 76 may be a flexible body. For example, the guide tube 76 may include one or more internal actuators for manipulating a configuration of the guide tube 76 to aid in maneuvering the probe 74 and the guide tube 76 within the propulsion system 68 to the component 66.

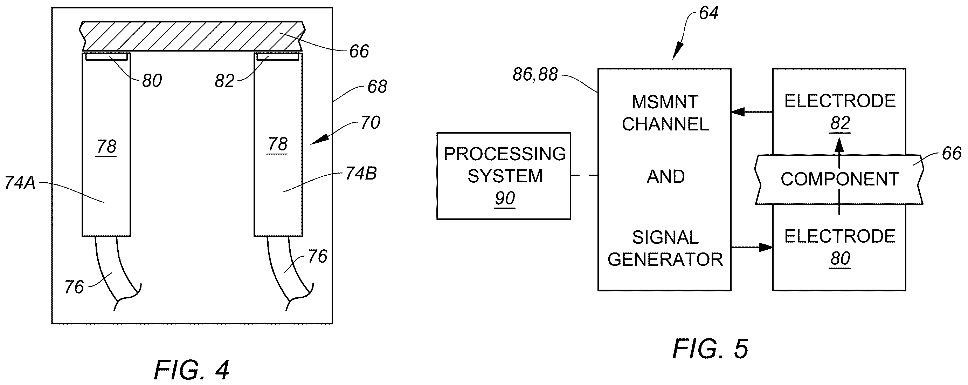

As shown in FIG. 4, the first electrode 80 and the second electrode 82 may alternatively be disposed on different, discrete probes of the probe assembly 70. For example, the probe assembly 70 may include a first probe 74A and a second probe 74B. The first probe 74A may include the first electrode 80 (e.g., on the probe housing 78 of the first probe 74A) and the second probe 74B may include the second electrode 82 (e.g., on the probe housing 78 of the second probe 74B). The first probe 74A and the second probe 74B may be separately guided within the propulsion system 68 to the component 66 by respective different guide tubes 76A, 76B. The probe assembly 70 configuration of FIG. 4 may facilitate electrode 80, 82 access to the component 66, for example, where available space proximate the component 66 is limited and/or where preferred electrode contact points on the component have a spacing and/or orientation which is difficult to accommodate with a single probe including the first electrode 80 and the second electrode 82.

Referring to FIGS. 3 and 5, the control assembly 72 of FIG. 3 includes a power supply 84, a signal generator 86, a measurement channel 88, and a processing system 90. The power supply 84 is electrically connected with the signal generator 86. The power supply 84 may be a direct current (DC) power supply configured to supply DC power to the signal generator 86. The signal generator 86 is electrically connected with the first electrode 80. The signal generator 86 is configured to convert the DC input from the power supply 84 to an alternating current (AC) output supplied to the first electrode 80. The signal generator 86 is operable to selectively vary a frequency of the AC output to the first electrode 80. The measurement channel 88 is electrically connected with the second electrode 82. The measurement channel 88 is configured to facilitate measurement of an electrical current flow from the signal generator 86, through the first electrode 80, through the component 66, through the second electrode 82, to the measurement channel 88, and to determine an impedance of the component 66 between the first electrode 80 and the second electrode 82 using the measured electrical current.

The processing system 90 is connected in signal communication with the signal generator 86 and the measurement channel 88. The processing system 90 includes a processor 92 connected in signal communication with memory 94. The processor 92 may include any type of computing device, computational circuit, processor(s), central processing unit (CPU), graphics processing unit (GPU), computer, or the like capable of executing a series of instructions that are stored in memory 94. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the processing system 90 and its processor 92 to accomplish the same algorithmically and/or coordination of probe assembly 70 components. The memory 94 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly and/or indirectly coupled to the probe assembly 70. The processing system 90 may include, or may be in communication with, a user interface including one or more inputs devices and/or one or more output devices, for example, an input device that enables a user to enter data and/or instructions and an output device configured to display information (e.g., a visual display or a printer), or to transfer data, etc. Communications between the processing system 90 and external electrical or electronic devices may be via a hardwire connection or via a wireless connection. A person of skill in the art will recognize that portions of the processing system 90 may assume various forms (e.g., digital signal processor, analog device, etc.).

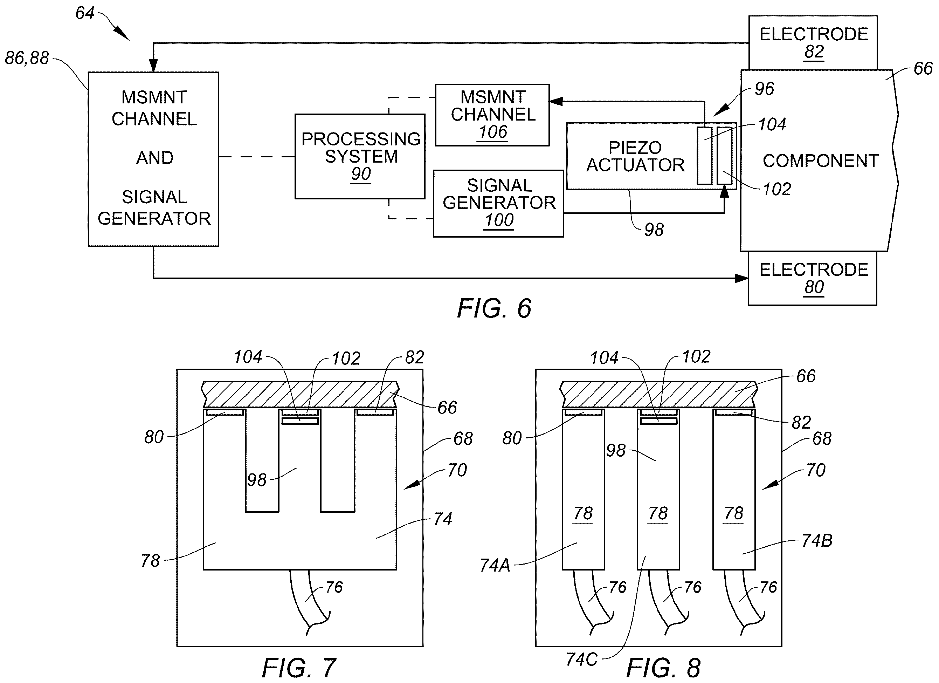

Referring to FIGS. 6-8, in some embodiments, the inspection system 64 may further include an actuator assembly 96. The actuator assembly 96 includes a piezoelectric actuator 98 (sometimes referred to as a "piezoelectric exciter" or a "piezoelectric shaker") and a signal generator 100. The piezoelectric actuator 98 includes a drive piezoelectric transducer 102 (a "drive piezo") electrically connected with the signal generator 100. In some embodiments, the piezoelectric actuator 98 may additionally include a sense piezoelectric transducer 104 (a "sense piezo") and the actuator assembly 96 may further include a measurement channel 106 electrically connected with the sense piezo 104. The signal generator 86 is configured to generate a high-frequency AC output and apply the AC output to the drive piezo 102 to control the drive piezo 102 to generate ultrasonic vibration for application to the component 66. The measurement channel 106 is electrically connected to the sense piezo 104. The measurement channel 106 is configured to measure a vibratory response of the sense piezo 104. In particular, the measurement channel 106 is configured to receive a high-frequency AC input from the sense piezo 104 (e.g., generated by the sense piezo 104 in response to the induced vibration). The control assembly 72 may include the signal generator 100 and the measurement channel 106. Alternatively, the signal generator 100 and the measurement channel 106 may be part of a second control assembly discrete from the control assembly 72. As shown in FIG. 7, the piezoelectric actuator 98 may be disposed on the probe housing 78 spaced from the first electrode 80 and the second electrode 82. As shown in FIG. 8, the piezoelectric actuator 98 may alternatively be disposed on a different, discrete probe of the probe assembly 70 from that of the first electrode 80 and/or the second electrode 82. For example, the probe assembly 70 may include a probe 74C including the piezoelectric actuator 98.

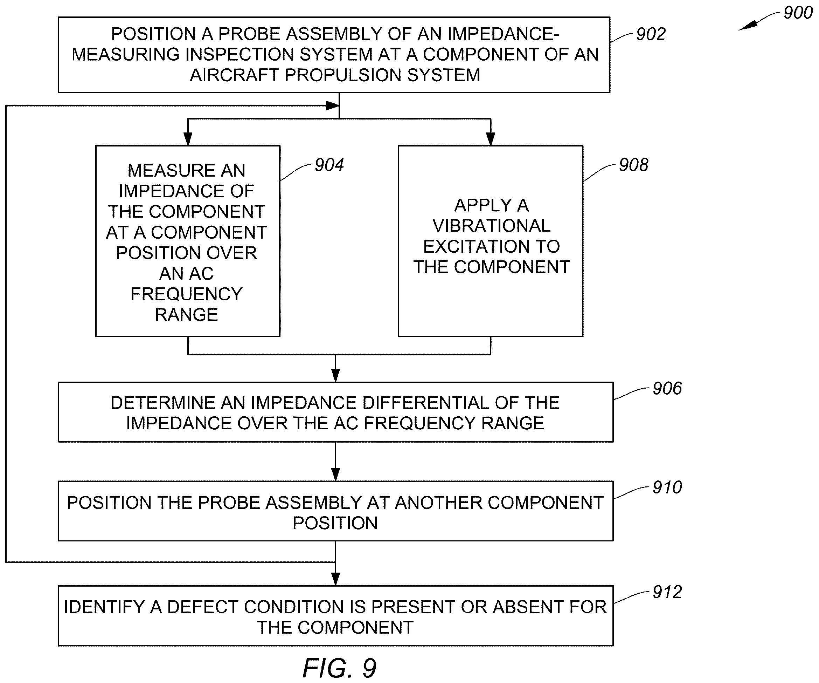

Referring to FIG. 9, a method 900 for inspecting a component (e.g., an aircraft propulsion system component; the component 66; etc.) using an impedance-measuring inspection system (e.g., the inspection system 64) is provided. The method 900 may facilitate identifying conditions indicative of one or more internal defects of a component (e.g., defect conditions) using electrical impedance inspection data, for example, while the component remains installed with its aircraft propulsion system on an aircraft. In particular, the method 900 may facilitate identifying defect conditions are present (e.g., a substantial probability that an internal defect is present in the component) or absent (e.g., an internal defect in the component is unlikely). Inspection of the component, in accordance with the present disclosure method 900, using an impedance-measuring inspection system (e.g., the inspection system 64) may facilitate identification of one or more internal defects of the component such as cracks, voids, etc. (e.g., embedded within material of) the component. FIG. 9 illustrates a flowchart for the method 900. Aspects of the method 900 are described herein for the component 66 and the inspection system 64. The control assembly 72 and its processing system 90 may be used to execute or control one or more steps of the method 900. For example, the processor 92 may execute instructions stored in the memory 94, thereby causing the processing system 90 and/or its processor 92 to execute or otherwise control one or more steps of the method 900. However, the method 900 is not limited to use with the particular inspection system 64, probe assembly 70, component 66, or the aircraft propulsion system 22, 68 of the present disclosure. Unless otherwise noted herein, it should be understood that the steps of method 900 are not required to be performed in the specific sequence in which they are discussed below and, in some embodiments, the steps of the method 900 may be performed separately or simultaneously.

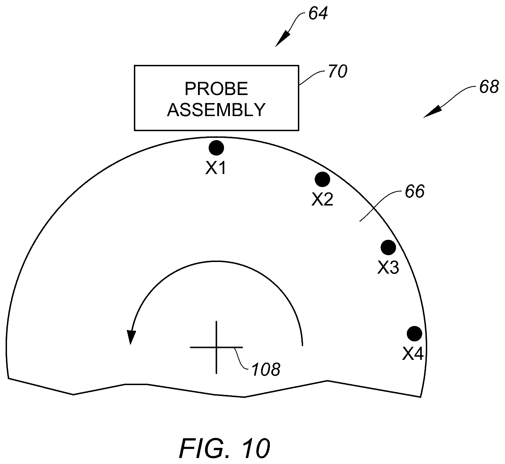

Step 902 includes positioning the probe assembly 70 at the component 66 with the first electrode 80 and the second electrode 82 contacting the component 66, for example, at respective, predetermined first and second contact points. The first electrode 80 and the second electrode 82 may be positioned on opposing sides of the component 66, on a same side of the component 66 within a designated space, or otherwise spaced from one another and in contact with the component 66. Step 902 may include guiding the probe assembly 70 through the propulsion system 68 to the component 66, for example, using the guide tube 76. As shown in FIG. 10, the probe assembly 70 (e.g., the first electrode 80 and the second electrode 82) may be positioned on the component 66 at a first circumferential position X1 relative to an axis 108 of the component 66. The axis 108 may be a rotational axis (e.g., the rotational axis 42; see FIG. 2) of the component 66 (e.g., a HPT or LPT rotor disk) mounted within the propulsion system 68. Positioning the probe assembly 70 at the component 66 may include rotating the component 66 about the axis 108 to facilitate access of the probe assembly 70 (e.g., the first electrode 80 and the second electrode 82) to the predetermined first and second contact points on the component 66 at the first circumferential position X1. Positioning the probe assembly 70 at the component 66 may additionally include positioning the piezoelectric actuator 98 contacting the component 66.

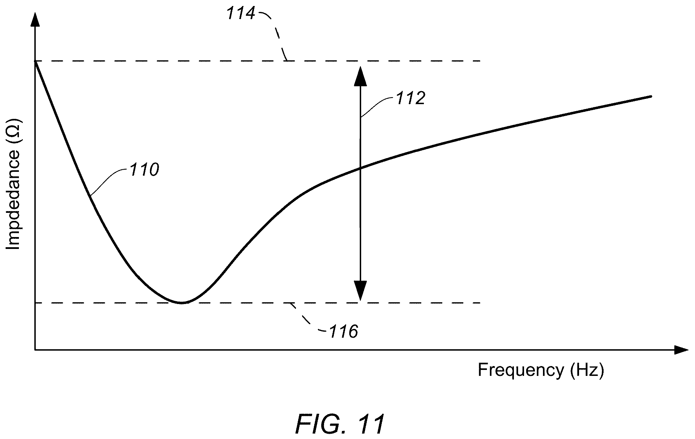

Step 904 includes measuring an impedance of the component 66. The impedance of the component 66 is measured at a measurement position (e.g., the first circumferential position X1) on the component 66 using the inspection system 64. Step 904 measuring the impedance of the component 66 over an AC frequency range to determine an impedance curve of the component 66 at the measurement position. FIG. 11 illustrates an exemplary impedance curve 110 measured by the inspection system 64 at the measurement position (e.g., the first circumferential position X1). The impedance curve 110 is determined by measuring the impedance of the component 66 between the first electrode 80 and the second electrode 82 while adjusting an AC output of the first electrode 80 to the component 66 (e.g., with the signal generator 86). For example, the processing system 90 may control the signal generator 86 to gradually increase or decrease a frequency of the AC output from a first frequency to a second frequency while measuring the component 66 impedance. The frequency range may between about 20 hertz (Hz) and about 2,000 Hz or, more particularly, between about 20 Hz and about 1,000 Hz. For frequencies below about 20 Hz or above about 2,000 Hz, measured impedances of the component 66 may increase significantly (e.g., due to the skin effect) and may not be substantially representative of internal defect conditions of the component 66. The present disclosure, however, is not limited to the foregoing exemplary frequency range for determining the impedance curve 110 of the component 66 at a given position on the component 66.

Step 906 includes determining an impedance differential 112 of the impedance curve 110 measured at the measurement position (e.g., the first circumferential position X1) on the component 66. The impedance differential 112 is a difference in the impedance of the impedance curve 110 measured between a maximum impedance 114 of the impedance curve 110 and a minimum impedance 116 of the impedance curve 110.

Step 908 includes optionally applying a vibrational excitation to the component 66 while measuring the impedance of the component 66 in step 904. For example, step 908 may include applying vibrational excitation to the component 66 with the actuator assembly 96 (e.g., the piezoelectric actuator 98) at one or more vibratory frequencies while measuring the impedance of the component 66 in step 904. The vibratory frequency(ies) may include one or more resonance frequencies of the component 66. Vibration of the component 66 while measuring the impedance of the component 66 may amplify a change in the electrical properties of the component 66 resulting from an internal defect, for example, by causing the internal defect to open, close, or otherwise deform, thereby facilitating improved accuracy of identifying a presence or an absence of internal defect conditions of the component 66.

Step 910 includes positioning the probe assembly 70 relative to the component 66 at a next measurement position on the component 66, measuring the impedance of the component 66 at the next measurement position, and determining the impedance differential 112 the impedance curve 110 measured at the next measurement position, as described above for steps 902, 904, 906 and, optionally, 908. Step 910 may include, as shown in FIG. 10 for example, rotating the component 66 about the axis 108 (e.g., by a predetermined angular increment) to position the probe assembly 70 at a second circumferential position X2 of the component 66. Step 910 may include positioning the probe assembly 70 at a plurality of different measurement positions on the component 66 to determine a representative impedance of the component 66 as a whole. For example, step 910 may include positioning the probe assembly 70 relative to the component 66 at a plurality of different circumferential positions X1, X2, X3, X4 ... Xn, and determining the impedance differential 112 at each of the different circumferential positions to determine a representative impedance of the component 66 about its full circumference.

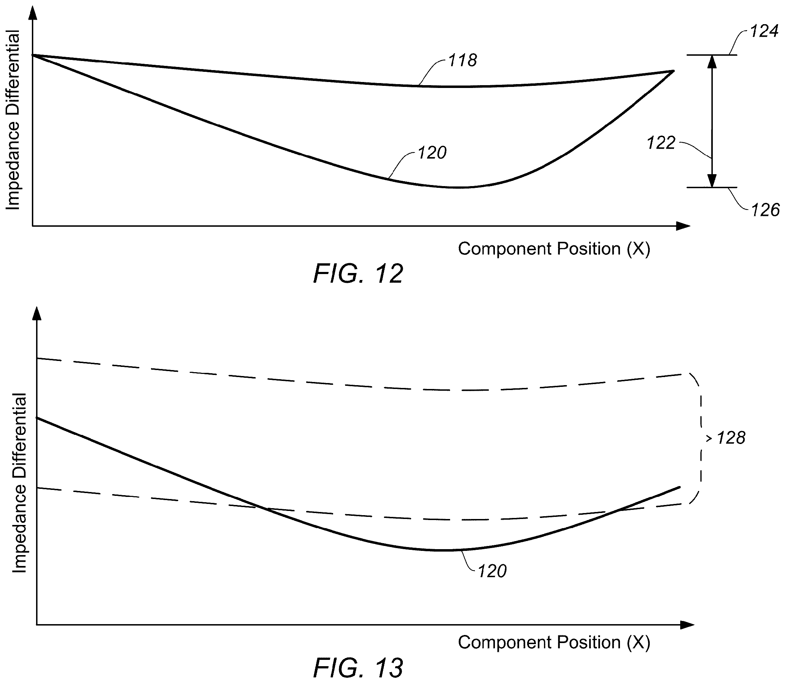

Step 912 includes identifying a defect condition is present or absent for the component 66 using the impedance differential 112 determined for the component 66 at each of the plurality of measurement positions on the component 66 to determine (e.g., generate) an impedance differential profile of the component 66. FIG. 12 illustrates a first impedance differential profile 118 for the component 66 and a second impedance profile 120 for the component 66. The impedance profile 118, 120 includes the impedance differential 112 (Y-axis) of the component 66 measured at each of the different measurement positions (X-axis) of the component 66. The first impedance differential profile 118 may be understood as representative of the component 66 wherein the defect condition is absent for the component 66 (e.g., the component 66 is unlikely to include an internal defect). Where the defect condition is absent for the component 66, the impedance differential of the impedance differential profile may be expected to vary relatively little between the different measurement positions on the component 66. The second impedance differential profile 120 may be understood as representative of the component 66 wherein the defect condition is present for the component 66 (e.g., there is a substantial probability that the component 66 includes at least one internal defect). In contrast to the first impedance differential profile 118, the second impedance differential profile 120 exhibits an impedance differential which varies significantly between the different measurement positions of the component 66.

Step 912 includes analyzing the impedance differential profile (e.g., the impedance differential profiles 118, 120) for the component 66 to identify (e.g., at the processing system 90) the defect condition is present or absent for the component 66. In some embodiments, the defect condition may be identified by comparing a variation 122 of the impedance differential profile 118, 120 to a variation threshold (e.g., a predetermined threshold value). The variation 122 may be a difference in the impedance differential of the impedance differential profile 118, 120 of the component 66 between a maximum impedance differential 124 of the impedance differential profile 118, 120 and a minimum impedance differential 126 of the impedance differential profile 118, 120 (shown in FIG. 12 for the impedance differential profile 120). The presence of the defect condition may be identified where the variation 122 is greater than the variation threshold and the absence of the defect condition may be identified where the variation 122 is less than the variation threshold. In some embodiments, the defect condition may be identified by comparing the impedance differential profile 118, 120 to a predetermined impedance differential profile for a model component (e.g., a computer-modeled component, a previously inspected component, etc.) representative of the component 66 and without any internal defects (i.e., the model impedance differential profile is defect-free). For example, as shown in FIG. 13, the presence of the defect condition may be identified for the component 66 where the impedance differential profile 120 (e.g., a portion of the impedance differential profile 120) is outside of an acceptable impedance differential range 128 for the component 66 based on the predetermined impedance differential profile for the model component. The present disclosure, however, is not limited to the foregoing exemplary analyses for identifying a presence or an absence of a defect condition of a component using an impedance differential profile for the component. **In** response to identification of the presence of a defect condition for the component 66, inspection personnel may take appropriate next steps to further inspect the component 66 (e.g., to verify a presence or absence of an internal defect) and/or initiate a process for replacing the propulsion system 68, repairing the component 66, or replacing the component 66.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A method for inspecting a component (66) for an aircraft propulsion system (22, 68) with an impedance-measuring inspection system (64), the method comprising:
for each of a plurality of different positions on the component (66),
positioning a probe assembly (70) of the impedance-measuring inspection system (64) at one of the plurality of different positions with a first electrode (80) and a second electrode (82) of the probe assembly (70) contacting the component (66),
measuring an impedance of the component (66) between the first electrode (80) and the second electrode (82) over a frequency range extending between a first alternating current (AC) frequency and a second AC frequency, and
determining an impedance differential (112) of the impedance over the frequency range; and
identifying a presence or an absence of a defect condition of the component (66) using an impedance differential profile (118, 120) for the component (66) including the impedance differential (112) at each of the plurality of different positions on the component (66).

2. The method of claim 1, wherein positioning the probe assembly (70) at the one of the plurality of different positions on the component (66) includes rotating the component (66) about an axis (108), and each of the plurality of different positions on the component (66) is a circumferential position (X1, X2, X3, X4) of the component (66) relative to the axis (108).

3. The method of claim 1 or 2, wherein the frequency range is between 20 hertz and 2,000 hertz or between 20 hertz and 1,000 hertz.

4. The method of claim 1, 2 or 3, further comprising, for each of the plurality of different positions on the component (66), applying a vibrational excitation of the component (66) while measuring the impedance of the component (66) between the first electrode (80) and the second electrode (82) over the frequency range.

5. The method of claim 4, wherein the vibrational excitation is applied at a vibratory frequency with a piezoelectric actuator (98) of the probe assembly (70), optionally wherein the vibratory frequency is a resonance frequency for the component (66).

6. The method of any preceding claim, wherein identifying the presence or the absence of the defect condition of the component (66) using the impedance differential profile (118, 120) includes determining a variation (122) of the impedance differential profile (118, 120) between a maximum impedance differential (124) and a minimum impedance differential (126) and comparing the variation (122) to a variation threshold, the presence of the defect condition identified where the variation (122) is greater than the variation threshold.

7. The method of any preceding claim, wherein identifying the presence or the absence of the defect condition of the component (66) using the impedance differential profile (118, 120) includes comparing the impedance differential profile (120) to a defect-free model impedance differential profile (118) for the component (66).

8. The method of any preceding claim , further comprising inserting the probe assembly (70) into the aircraft propulsion system (22, 68) to position the probe assembly (70) at the component (66) prior to, for each of the plurality of different positions on the component (66), positioning the probe assembly (70), measuring the impedance, and determining the impedance differential (112).

9. The method of claim 8, wherein the step of inserting the probe assembly (70) into the aircraft propulsion system (22, 68) to position the probe assembly (70) at the component (66) is performed with the aircraft propulsion system (22, 68) installed on an aircraft (20).

10. The method of any preceding claim, wherein the component (66) is a gas turbine engine rotor disk of the aircraft propulsion system (22, 68).

11. An impedance-measuring inspection system (64) comprising:
a probe assembly (70) including a first electrode (80) and a second electrode (82); and
a control assembly (72) including a signal generator (86), a measurement channel (88), and a processing system (90), the signal generator (86) electrically connected with the first electrode (80), the measurement channel (88) electrically connected with the second electrode (82), the processing system (90) including a processor (92) connected in signal communication with a non-transitory memory (94) storing instructions which, when executed by the processor (92), cause the processor (92) to:
measure, using the measurement channel (88), an impedance of a component (66) between the first electrode (80) and the second electrode (82) while controlling the signal generator (86) to generate an alternating current (AC) output to the first electrode (80) over a frequency range extending between a first AC frequency and a second AC frequency;
determine an impedance differential (112) of the impedance over the frequency range;
generate an impedance differential profile (118, 120) for the component (66) with the impedance differential (112) determined for a plurality of different positions on the component (66); and
identify a presence or an absence of a defect condition of the component (66) using the impedance differential profile (118, 120).

12. The impedance-measuring inspection system (64) of claim 11, wherein the probe assembly (70) includes a probe (74), the probe (74) includes a probe housing (78), and the first electrode (80) and the second electrode (82) are disposed on the probe housing (78).

13. The impedance-measuring inspection system (64) of claim 11, wherein the probe assembly (70) includes a first probe (74A) and a second probe (74B), the first electrode (80) is disposed on the first probe (74A), and the second electrode (82) is disposed on the second probe (74B).

14. The impedance-measuring inspection system (64) of claim 11, further comprising an actuator assembly (96) including a piezoelectric actuator (98).

15. The impedance-measuring inspection system (64) of claim 14, wherein the probe assembly (70) includes a probe (74), the probe (74) includes a probe housing (78), and the first electrode (80), the second electrode (82), and the piezoelectric actuator (98) are disposed on the probe housing (78).
